# EUROPÄISCHE PATENTSCHRIFT

(11) **EP 3 721 291 B1**
(45) Veröffentlichungstag und Bekanntmachung des Hinweises auf die Patenterteilung: **07.06.2023**
(21) Anmeldenummer: 18808340.6
(22) Anmeldetag: 26.11.2018
(51) Int. Cl.: G02F 1/355, G02F 1/31, H01S 3/082, H01S 3/11, G02F 1/35

(54) **OPTISCHES ELEMENT MIT ALTERNIERENDEN BRECHUNGSINDEXÄNDERUNGEN UND DESSEN VERWENDUNG**
OPTICAL ELEMENT HAVING ALTERNATING REFRACTIVE INDEX CHANGES, AND USE THEREOF
ÉLÉMENT OPTIQUE PRÉSENTANT DES ALTERNANCES DE VARIATIONS DE L'INDICE DE RÉFRACTION ET UTILISATION ASSOCIÉE

(30) Priorität: 06.12.2017 DE 102017129069
(43) Veröffentlichungstag der Anmeldung: 14.10.2020
(73) Patentinhaber: Laser Zentrum Hannover E.V., 30419 Hannover (DE)
(72) Erfinder: JUPÉ, Marco, 30419 Hannover (DE); RISTAU, Detlev, 30851 Langenhagen (DE)
(74) Vertreter: REHBERG HÜPPE + PARTNER
(86) Internationale Anmeldenummer: PCT/EP2018/082502
(87) Internationale Veröffentlichungsnummer: WO 2019/110345

(56) Entgegenhaltungen:
- EP-A1- 3 217 489
- EP-A2- 1 215 528
- GB-A- 2 458 840
- US-A1- 2015 378 243

## Beschreibung

### TECHNISCHES GEBIET DER ERFINDUNG

Die Erfindung betrifft ein optisches Element mit einer optischen Achse, einer Designwellenlänge und alternierenden Brechungsindexänderungen längs der optischen Achse sowie den weiteren Merkmalen des Oberbegriffs des unabhängigen Patentanspruchs 1. Weiterhin bezieht sich die Erfindung auf Verwendungen eines solchen optischen Elements in einem Laserresonator.

### STAND DER TECHNIK

Aus der EP 0 541 304 B1 ist eine optische Vorrichtung bekannt, die ein erstes und ein davon beabstandetes zweites reflektierendes Element umfasst, um zwischen diesen ein Fabry-Pérot-Etalon auszubilden, welches eine Vielzahl von optischen Resonanzfrequenzen aufweist. Zwischen dem ersten und dem zweiten reflektierenden Element angeordnetes Halbleitermaterial der optischen Vorrichtung weist bei einer vorbestimmten optischen Frequenz eine nichtlineare optische Absorption auf. Dabei liegt die optische Frequenz so zwischen zwei benachbarten optischen Resonanzfrequenzen, dass sie im Wesentlichen bei einer optischen Frequenz liegt, die einer anti-resonanten Bedingung des Fabry-Pérot-Etalons entspricht. Das Halbleitermaterial wirkt als sättigbare Absorberelement, das erst ab einer Sättigungsgrenze der Intensität von Licht transparent wird. Die optische Vorrichtung wird auch als sättigbarer Fabry-Pérot-Absorber bezeichnet. Es zählt zu den SESAMs (semiconductor saturable absorber mirrors) und kann zur Modenkopplung oder zur Güteschaltung in einem Laserresonator verwendet werden. In der praktischen Anwendung von SESAMs ergeben sich häufige Probleme in Bezug auf die Zerstörfestigkeit bei hohen Lichtintensitäten, optische Verluste und Degradation der Absorber.

Zudem sind im Wellenlängenbereich unterhalb 780 nm keine praktisch einsetzbaren Absorber verfügbar.

Aus der EP 3 217 489 A1 ist ein optisches Element mit einem Stapel von optischen Schichten aus Materialien mit einer Nichtlinearität dritter Ordnung bekannt. Das optische Element ist dazu vorgesehen, Licht abhängig von seiner Intensität zu modulieren. Speziell soll die Reflektivität oder Transmissivität des optischen Elements von der Intensität des Lichts abhängig sein. Diese Abhängigkeit basiert auf dem Kerr-Effekt, nach dem der Gesamtbrechungsindex n bei Materialien mit einer Nichtlinearität dritter Ordnung gemäß n = n₀ + I · n₂ von der Intensität I des Lichts und einem nichtlinearen Brechungsindex n₂ abhängt. Mit dem Produkt I · n₂ der Intensität I des Lichts und des nichtlinearen Brechungsindex n₂ soll neben dem Kerr-Effekt auch die prozentuale Absorption des Lichts und damit die thermische Belastung des optischen Elements ansteigen. Gemäß der EP 3 217 489 A1 soll der nichtlineare Beitrag n₂ daher kleiner als 10⁻¹² cm²/W bleiben, um das optische Element unempfindlich gegenüber sehr hohen Lichtintensitäten zu machen. Aus der EP 3 217 489 A1 geht hervor, dass dotierte Polymerfilme einen nichtlinearen Brechungsindex n₂ von etwa 1,7 x 10⁻⁶ cm²/W aufweisen. Der Stapel aus den Kerr-aktiven optischen Schichten des optischen Elements kann mindestens eine Vollwellenkavität aufweisen, die bei der Zentralwellenlänge des Lichts resonant ist. Der resultierende Resonator bewirkt eine Feldverstärkung innerhalb des Stapels, so dass der nichtlineare Effekt auf den Brechungsindex auch mit moderaten Intensitäten des einfallenden Lichts erreicht wird. Mit mehreren solcher Kavitäten soll der optische Kerr-Effekt weiter verstärkt werden können.

In M. Jupé et al.: Schnelle Schalter durch präzise ausgelegte Mehrschichtsysteme (2016), siehe https://www.photonikforschung.de/service/nachrichten/detailansicht/schnelle-schalter-durch-praezise-ausgelegte-mehrschichtsysteme.html wird ein Kerr-Band-Schalter vorgeschlagen, um ein zur Verwendung von sättigbaren Halbleiterspiegeln, d. h. sogenannten SESAMs ("semiconductor-saturable-absorber-mirrors"), alternatives Modenkopplungskonzept zu realisieren, welches auf der Ausnutzung des Kerr-Effekts in Dünnschichtsystemen beruht. Der Kerr-Band-Schalter besteht aus einem dielektrischen Schichtsystem, in das eine oder mehrere Kerr-aktive Schichten eingebettet sind. Bei der Entwicklung von hohen Lichtintensitäten ändern diese ihren Brechwert geringfügig, wodurch das Übertragungsverhalten der Komponente beeinflusst wird. Damit soll der Kerr-Band-Schalter ein verlustfreies Schalten der Resonatorgüte eines Laserresonators gestatten.

### AUFGABE DER ERFINDUNG

Der Erfindung liegt die Aufgabe zugrunde, ein insbesondere als optischer Schalter in einem Laserresonator geeignetes optisches Element aufzuzeigen, das eine hohe Zerstörschwelle aufweist, so dass es auch zum Schalten von Licht mit sehr hoher Intensität geeignet ist, und das auch für das Schalten von Licht mit Wellenlängen unterhalb von 780 nm geeignet ist.

### LÖSUNG

Erfindungsgemäß wird die Aufgabe durch ein optisches Element mit dem Merkmal des unabhängigen Patentanspruchs 1 gelöst. Die abhängigen Patentansprüche 2 bis 12 betreffen vorteilhafte Ausgestaltungen des erfindungsgemäßen optischen Elements. Die Patentansprüche 13 und 14 sind auf vorteilhafte Verwendungen des erfindungsgemäßen optischen Elements in einem Laserresonator gerichtet.

### BESCHREIBUNG DER ERFINDUNG

Die Erfindung betrifft ein optisches Element mit einer optischen Achse, einer Designwellenlänge und alternierenden Brechungsindexänderungen längs der optischen Achse, wobei durch die alternierenden Brechungsindexänderungen in mindestens drei längs der optischen Achse aufeinanderfolgenden Bereichen Reflektoren für längs der optischen Achse einfallendes Licht mit der Designwellenlänge und zwischen jeweils zwei der aufeinanderfolgenden Reflektoren ein optischer Resonator für das längs der optischen Achse einfallende Licht mit der Designwellenlänge ausgebildet sind und wobei mindestens einer der Resonatoren ein Kerr-aktives Material umfasst. Das optische Element ist erfindungsgemäß dadurch gekennzeichnet, dass sich mindestens zwei der Resonatoren in nichtlinearen Anteilen I_{Res}(i) n₂(i) an ihren Gesamtbrechungsindices n(i) = n₀(i) + I_{Res}(i) · n₂(i) um mindestens 50 % des vom Betrag her kleineren der beiden nichtlinearen Anteile I_{Res}(i) · n₂(i) unterscheiden, wobei I_{Res}(i) eine aufgrund einer Anordnung des jeweiligen Resonators zwischen den Reflektoren in dem jeweiligen Resonator resultierende Intensität des längs der optischen Achse eingestrahlten Lichts mit der Designwellenlänge und n₂(i) ein nichtlinearer Brechnungsindex des jeweiligen Resonators ist.

Soweit hier und an anderen Stellen dieser Beschreibung sowie in den Patentansprüchen der Begriff "Licht" verwendet wird, so bezeichnet er elektromagnetische Strahlung, die aus einem Wellenlängenbereich ausgewählt ist, welcher vom Infraroten bis zum Ultravioletten reicht. Insbesondere kann es sich um Laserstrahlung handeln. Mit dem Begriff "Intensität" des Lichts ist hier und an anderen Stellen dieser Beschreibung sowie in den Patentansprüchen die räumliche Leistungsdichte der elektromagnetischen Strahlung gemeint. Die in den Reflektoren resultierenden Intensitäten I_{Res}(i) hängen sämtlich von einer Eingangsintensität des längs der optischen Achse einfallenden Lichts ab. Es versteht sich daher, dass das Verhältnis der nichtlinearen Anteile I_{Res}(i) · n₂(i) an den Gesamtbrechungsindices n(i) = n₀(i) + I_{Res}(i) · n₂(i) bei gleicher Eingangsintensität betrachtet wird.

Die hier und an anderen Stellen dieser Beschreibung sowie in den Patentansprüchen verwendete Bezeichnung "optische Achse" impliziert nicht zwingend, dass diese optische Achse eine feste räumliche Beziehung zu Strukturen des optischen Elements aufweist, also beispielsweise orthogonal zu Schichten eines Schichtaufbaus des optischen Elements verläuft. Die optische Achse ist vielmehr durch den Effekt des optischen Elements auf das längs der optischen Achse einfallende Licht definiert. So kann das Licht auch unter einem von 90° deutlich abweichenden Winkel auf die Schichten eines Schichtaufbaus des optischen Elements auftreffen. Dies kann zum Beispiel dazu genutzt werden, das optische Element gezielt zur Beeinflussung von Licht nur einer bestimmten Polarisationsrichtung zu verwenden.

Die Designwellenlänge des optischen Elements ist die Wellenlänge, bei der das optische Element auf eine hohe Intensität durch Änderung seiner optischen Eigenschaften zwischen Reflexion und Transmission besonders stark anspricht. Für diese Designwellenlänge sind durch die alternierenden Brechungsindexänderungen mindestens drei Reflektoren ausgebildet, zwischen denen zwei Resonatoren angeordnet sind. Die Formulierung "alternierende Brechungsindexänderungen" steht dabei für sich längs der optischen Achse abwechselnde Abnahmen und Zunahmen des Brechungsindex des optischen Elements. Dabei können diese Abnahmen und Zunahmen des Brechungsindex sprunghaft zwischen jeweils zwei längs der optischen Achse aufeinander folgenden Schichten oder wie bei so genannten Rugate-Strukturen stetig verlaufen. Weiterhin können die durch die alternierenden Brechungsindexänderungen erreichten Maximal- und Minimalwerte des Brechungsindex konstant sein oder über das optische Element längs der optischen Achse variieren. Die notwendige Anzahl an alternierenden Brechungsindexänderungen zur Ausbildung eines Reflektors hängt von der Größe der Brechungsindexänderung ab. Bei ausreichend großen Brechungsindexunterschieden können zwei Brechungsindexänderungen, die bei einem Schichtaufbau drei aufeinanderfolgenden Schichten entsprechen, zur Ausbildung eines Reflektors ausreichend sein. Bei kleineren Brechungsindexunterschieden werden mehr Brechungsindexänderungen benötigt. Die Periode der alternierenden Brechungsindexänderungen längs der optischen Achse beträgt typischerweise die Hälfte der Designwellenlänge, wobei der optische Abstand der einzelnen Brechungsindexänderungen ein Viertel der Designwellenlänge beträgt. Die Resonatoren weisen jeweils eine optische Erstreckung in Richtung der optischen Achse vom Einfachen oder von einem Vielfachen der halben Designwellenlänge auf. Die optischen Abmaße der Reflektoren und Resonatoren müssen nicht genau und nicht sämtlich den voranstehenden Angaben entsprechen. Eine wesentliche Entsprechung ist ausreichend.

Bei dem erfindungsgemäßen optischen Element kann das Kerr-aktive Material stark lokalisiert sein. Konkret ist es möglich, dass das Kerr-aktive Material ausschließlich in dem mindestens einen Resonator angeordnet ist. Dabei muss das Kerr-aktive Material nicht einmal in dem gesamten Resonator vorhanden sein, sondern es kann auf einen Teilbereich des Resonators begrenzt sein. Anders gesagt kann der mindestens eine und kann auch jeder andere Resonator des erfindungsgemäßen optischen Elements einen mehrschichtigen Aufbau aufweisen. Durch die starke Lokalisierung des Kerr-aktiven Materials in dem erfindungsgemäßen optischen Element wird sichergestellt, dass auch dann, wenn die prozentuale Absorption des Lichts durch das Kerr-aktive Material mit dem Kerr-Effekt ansteigt, die absolute Absorption sehr gering bleibt und damit auch die thermische Belastung des optischen Elements in seiner Gesamtheit. Zugleich weist das erfindungsgemäße optische Element eine hohe Effektivität, das heißt Empfindlichkeit in Bezug auf die Änderung seines optischen Verhaltens zwischen Reflexion und Transmission mit ansteigender Intensität des Lichts der Designwellenlänge auf. Dies geht darauf zurück, dass seine Reflektoren so aufeinander abgestimmt sind, dass sie signifikant unterschiedliche Kerr-Effekte zeigen, das heißt unterschiedlich stark mit der Intensität des längs der optischen Achse einfallenden Lichts verstimmt oder auch gestimmt werden. Durch dieses gegeneinander Verstimmen oder aufeinander Abstimmen der Resonatoren wird die Auswirkung des Kerr-Effekts auf das optische Verhalten des optischen Elements in Bezug auf die Veränderung seines optischen Verhaltens zwischen Reflexion und Transmission bei der Designwellenlänge verstärkt. Zudem wird das Kerr-aktive Material dort eingesetzt, wo die höchste Intensität des einfallenden Lichts resultiert, d. h. in einem der Resonatoren.

Konkret können die Resonatoren aus einem Ausgangszustand bei geringer Intensität des längs der optischen Achse einfallenden Lichts mit der Designwellenlänge, in dem zumindest einer der Resonatoren gegenüber einem idealen Resonator bei der Designwellenlänge verstimmt ist, mit zunehmender Intensität des Lichts mit der Designwellenlänge sämtlich ideal auf die Designwellenlänge abgestimmt werden, so dass das optische Element für das Licht mit der Designwellenlänge transparent wird. Umgekehrt können bei geringer Intensität des Lichts mit der Designwellenlänge ideal abgestimmte Resonatoren mit hoher Intensität des Lichts mit der Designwellenlänge gegeneinander verstimmt werden.

Soweit optische Materialien zur Ausbildung von Reflektoren und dazwischen liegenden Resonatoren durch alternierende Brechungsindexänderungen verfügbar sind, ist das erfindungsgemäße optische Element für Designwellenlängen in einem ausgedehnten Bereich vom Ultravioletten bis zum Infraroten auslegbar, da bei allen optischen Materialien zumindest eine gewisse Kerr-Aktivität auftritt.

Das Kriterium, dass sich die mindestens zwei der Resonatoren in den nichtlinearen Anteilen I_{Res}(i) · n₂(i) an ihren Gesamtbrechungsindices n(i) = n₀(i) + I_{Res}(i) · n₂(i) um mindestens 50 % des vom Betrag her kleineren der beiden nichtlinearen Anteile I_{Res}(i) · n₂(i) unterscheiden, schließt die Möglichkeit ein, dass die nichtlinearen Brechungsindizes n₂(i) der beiden Resonatoren unterschiedliche Vorzeichen haben. Es schließt auch die Möglichkeit ein, dass sich die beiden nichtlinearen Anteile I_{Res}(i) · n₂(i) vor allem durch unterschiedliche resultierende Intensitäten I_{Res}(i) in den jeweiligen Resonatoren unterscheiden. Diese resultierende Intensität I_{Res}(i) berücksichtigt die Intensitätserhöhung in den Resonatoren, die sich in Abhängigkeit von der Ausbildung der Resonatoren und der sie begrenzenden Reflektoren ergibt. Die resultierende Intensität I_{Res}(i) ist dabei immer bei fester Intensität des längs der optischen Achse einfallenden Lichts mit der Designwellenlänge für die einzelnen Resonatoren zu betrachten. Dabei kann diese Betrachtung entweder bei geringer Intensität und/oder bei hoher Intensität des längs der optischen Achse einfallenden Lichts mit der Designwellenlänge vorgenommen werden.

Bei dem erfindungsgemäßen optischen Element können die Reflektoren ganz oder zumindest überwiegend aus nicht Kerr-aktiven Materialen ausgebildet sein, die einen Gesamtbrechungsindex n(k) = n₀(k) + l · n₂(k) aufweisen, wobei ein Betrag eines nichtlinearen Brechungsindex n₂(k) maximal die Hälfte des Betrags des nichtlinearen Brechungsindex n₂(i) des mindestens einen Resonators mit dem Kerr-aktiven Material ausmacht. Das nicht Kerr-aktive oder Kerr-inaktive Material der Reflektoren definiert sich insoweit gegenüber dem Kerr-aktiven Material des mindestens einen Resonators hinsichtlich eines Größenunterschieds im Betrag des jeweiligen nichtlinearen Brechungsindex n(k) beziehungsweise n(i). Dieser Größenunterschied kann auch noch ausgeprägter sein und dazu führen, dass der Betrag des nichtlinearen Brechungsindex n₂(k) der Materialien der Reflektoren maximal ein Viertel oder sogar maximal ein Achtel des Betrags des nichtlinearen Brechungsindex n₂(i) des mindestens einen Resonators mit dem Kerr-aktiven Material ist.

In absoluten Größen kann der Betrag des nichtlinearen Brechungsindex n₂(k) an dem Gesamtbrechungsindex n(k) der Materialien der Reflektoren kleiner oder gleich 4,0 x 10⁻¹⁶ cm²/W oder sogar kleiner oder gleich 3,0 x 10⁻¹⁶ cm²/W oder sogar kleiner oder gleich 2,0 x 10⁻¹⁶ cm²/W sein. In diesen Bereich fallen auch die typischerweise höheren nichtlinearen Brechungsindices von üblichen höherbrechenden optischen Materialien, die für hohe Lichtintensitäten und entsprechend für optische Elemente in Laserresonatoren geeignet sind. Indem bei dem erfindungsgemäßen optischen Element ein durch unterschiedliche nichtlineare Anteile I_{Res}(i) · n₂(i) an den Gesamtbrechungsindices n(i) = n₀(i) + I_{Res}(i) · n₂(i) dokumentierte unterschiedliche Kerr-Effekte in verschiedenen Resonatoren genutzt werden, um die gewünschte Änderung zwischen Reflexion und Transmission des Lichts mit der Designwellenlänge hervorzurufen, reicht als Kerr-aktives Material in dem mindestens einen Resonator ein Material aus, das nach absoluten Maßstäben nur eine relativ geringe Kerr-Aktivität aufweist. Dies schließt aber den Einsatz von Materialien mit höherer Kerr-Aktivität, das heißt mit größeren nichtlinearen Brechungsindices keinesfalls aus.

Ebenso wie die Reflektoren kann auch mindestens ein weiterer der Resonatoren zumindest überwiegend aus nicht Kerr-aktivem Material ausgebildet sein, so dass er einen Brechungsindex n(p) = n₀(p) + I · n₂(p) aufweist, wobei ein Betrag des nichtlinearen Brechungsindex n₂(p) maximal die Hälfte, oder sogar maximal ein Viertel oder sogar maximal ein Achtel des Betrags des nichtlinearen Brechungsindex n₂(i) des mindestens einen Resonators mit dem Kerr-aktiven Material ist. Auch absolut gesehen kann der Betrag des nichtlinearen Brechungsindex n₂(p) an dem Gesamtbrechungsindex n(p) des mindestens einen weiteren der Resonatoren so groß sein wie bei dem nicht Kerr-aktiven Materialien der Reflektoren, das heißt kleiner oder gleich 4,0 x 10⁻¹⁶cm²/W oder kleiner oder gleich 3,0 x 10⁻¹⁶cm²/W oder kleiner oder gleich 2,0 x 10⁻¹⁶ cm²/W.

Typischerweise sind bei dem erfindungsgemäßen optischen Element nicht nur die mindestens zwei, sondern drei, vier oder fünf Resonatoren zwischen den Reflektoren angeordnet. Grundsätzlich kann die Zahl der Resonatoren auch noch größer sein. Hierdurch wird der Gesamtaufbau des optischen Elements jedoch komplexer, wobei sich diese Komplexität nur selten aufgrund von damit erreichten Verbesserungen der optischen Eigenschaften des optischen Elements lohnt.

Als konkret bei dem erfindungsgemäßen optischen Element einsetzbares Kerr-aktives Material des mindestens einen der Resonatoren ist Titandioxid (TiO₂) zu nennen. Nicht Kerr-aktives Material mindestens eines weiteren der Resonatoren kann im Wesentlichen aus Ta₂O₅ oder einem anderen Metalloxid bestehen. Als niedrigbrechendes nicht Kerr-aktives Material der Reflektoren ist Siliziumdioxid (SiO₂) geeignet, und als hochbrechendes nicht Kerr-aktives Material der Reflektoren kann Ta₂O₅ oder ein anderes Metalloxid eingesetzt werden. Diese Materialien können zerstörungsfrei den hohen Intensitäten des Laserlichts in einem Resonator ausgesetzt werden, in dem ein Titansaphirkristall als laseraktives Material angeordnet ist.

Wie bereits angesprochen wurde, können bei dem erfindungsgemäßen optischen Element in dem mindestens einen Resonator auch Kerr-aktive Materialien zum Einsatz kommen, die absolut gesehen nur eine geringe Kerr-Aktivität aufweisen. Dennoch kann eine hohe Kerr-Aktivität, das heißt ein hoher Betrag eines nichtlinearen Brechungsindex n₂ des Kerr-aktiven Materials, das einen von der Intensität I des Lichts abhängigen Gesamtbrechungsindex n_{Kerr} = n₀ + I · n₂ aufweist, vorteilhaft sein. Dieser Betrag |n₂| kann beispielsweise größer oder gleich 1 x 10⁻¹⁴ cm²/W oder auch größer oder gleich 1 x 10⁻¹² cm²/W oder sogar größer oder gleich 1 x 10⁻¹⁰ cm²/W oder sogar größer oder gleich 1 x 10⁻⁸ cm²/W oder sogar größer oder gleich 1 x 10⁻⁶ cm²/W sein. Damit kann der Betrag |n₂| insbesondere viel größer sein, als ihn die EP 3 217 489 A1 als sinnvoll ansieht, die hierfür eine Grenze von 10⁻¹² cm²/W setzt. Durch die geringe und häufig auf einen einzigen Resonator beschränkte Menge des Kerr-aktiven Materials bleibt die in dem neuen erfindungsgemäßen Element absorbierte Energie des Lichts und damit auch die resultierende Erwärmung des optischen Elements auch dann klein, wenn sie grundsätzlich mit dem auftretenden Kerr-Effekt ansteigt.

Die voranstehend genannten hohen und sehr hohen nichtlinearen Brechungsindex n₂ an dem Gesamtbrechungsindex n_{Kerr} des Kerr-aktiven Materials lassen sich zum Beispiel durch Polymere und/oder durch Dotierung mit Nanopartikeln erreichen. So kann das Kerr-aktive Material des mindestens einen der Resonatoren ein Polymer sein und/oder mit Nanopartikeln dotiert sein, die mindestens ein Metall oder einen Halbleiter aufweisen. Dabei ist anzumerken, dass in dieser Anmeldung mit dem Begriff Halbleiter auf die chemische Zusammensetzung des Materials Bezug genommen wird, so dass der Halbleiter beispielsweise GaAs sein kann.

Die Nanopartikel, mit denen das Kerr-aktive Material dotiert ist und die sich steigernd auf seine Kerr-Aktivität auswirken, können insbesondere eine Partikelgröße im Bereich von 1 bis 100 nm aufweisen und/oder zumindest überwiegend aus Gold, Silber, Platin, Palladium oder Kupfer, das heißt einem Edelmetall, ausgebildet sein. Dabei mag dahingestellt bleiben, durch welchen Mechanismus die Nanopartikel die Kerr-Aktivität des Kerr-aktiven Materials steigern. In jedem Fall ist ihre steigernde Auswirkung auf die Kerr-Aktivität nachweisbar.

Zur Verwendung des erfindungsgemäßen optischen Elements wurde bereits ausgeführt, dass bei dieser ausgenutzt werden kann, dass eine Erhöhung der Intensität I des längs der optischen Achse einfallenden Lichts mit der Designwellenlänge die Transmission des optischen Elements in einem Durchlassband um die Designwellenlänge entweder reduziert oder erhöht. So kann das optische Element insbesondere als optischer Schalter verwendet werden, der abhängig von der Intensität des längs der optischen Achse einfallenden Lichts mit einer Wellenlänge in dem Durchlassband zwischen Transmission und Reflexion schaltet.

Wenn das Schalten mit zunehmender Intensität des einfallenden Lichts von Transmission zu Reflexion erfolgt, kann hierdurch eine Modenkopplung oder Güteschaltung in einem Laserresonator bewirkt werden. Durch das Schalten von Reflexion zu Transmission kann zum Beispiel die Intensität des Lichts in einem Laserresonator nach oben begrenzt, beziehungsweise ein einzelner hoch energetischer Puls aus einem Laserresonator ausgekoppelt werden.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch andere Merkmale ergänzt werden oder die einzigen Merkmale sein, die das jeweilige optische Element bzw. seine Verwendung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisch eine Ausführungsform des erfindungsgemäßen optischen Elements.
- **Fig. 2**: zeigt die Veränderung des spektralen Verhaltens einer ersten konkreten Ausführungsform des erfindungsgemäßen optischen Elements.
- **Fig. 3**: zeigt das Ergebnis von intensitätsabhängigen Transmissionsmessungen an der ersten praktischen Ausführungsform des erfindungsgemäßen optischen Elements, wie sie Fig. 2 zugrunde liegt.
- **Fig. 4**: zeigt die Veränderung des spektralen Verhaltens einer ersten Variante der ersten praktischen Ausführungsform des optischen Elements, wie sie Fig. 2 zugrunde liegt.
- **Fig. 5**: zeigt die Veränderung des spektralen Verhaltens einer zweiten Variante der ersten praktischen Ausführungsform des erfindungsgemäßen optischen Elements, wie sie Fig. 2 zugrunde liegt.
- **Fig. 6**: zeigt die Veränderung der Feldstärkeverteilung über die zweite Variante der ersten praktischen Ausführungsform des erfindungsgemäßen optischen Elements, die mit der Veränderung ihres spektralen Verhaltens gemäß Fig. 5 einhergeht.
- **Fig. 7**: zeigt die Veränderung des spektralen Verhaltens einer zweiten praktischen Ausführungsform des erfindungsgemäßen optischen Elements.
- **Fig. 8**: illustriert stark schematisch eine erste Verwendung eines erfindungsgemäßen optischen Elements in einem Laserresonator.
- **Fig. 9**: illustriert ebenso schematisch wie Fig. 8 eine andere Verwendung eines anderen erfindungsgemäßen optischen Elements in einem Laserresonator.

### FIGURENBESCHREIBUNG

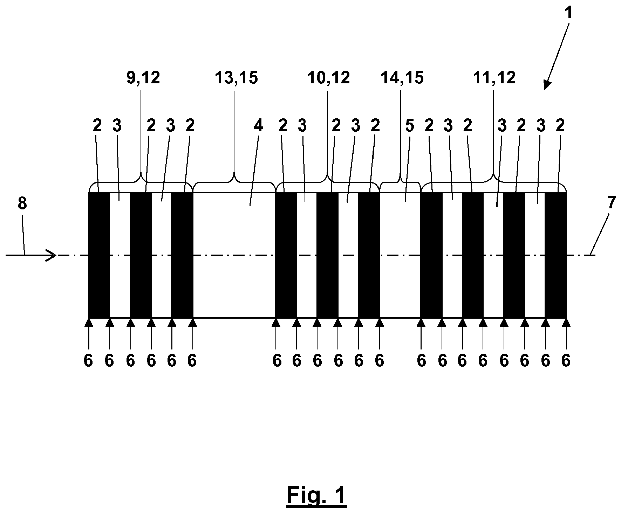

Ein in **Fig. 1** schematisch illustriertes erfindungsgemäßes optisches Element 1 weist aufeinanderfolgende Schichten 2 bis 5 auf, wobei zwischen jeweils zwei direkt aufeinanderfolgenden Schichten 2 und 3, 3 und 2, 2 und 4, 4 und 2, 2 und 5 sowie 5 und 2 jeweils eine hier aufgrund unterschiedlicher Brechungsindices der Schichten 2 bis 5 sprunghafte Brechungsindexänderungen 6 ausgebildet sind. Die Brechungsindexänderungen 6 folgen längs einer optischen Achse 7 aufeinander, und sie sind für Licht 8, das längs der optischen Achse 7 einfällt und eine Designwellenlänge λ aufweist in bestimmten Abständen vorgesehen, so dass mehrere längs der optischen Achse 7 aufeinanderfolgende Bereiche 9 bis 11, 13 und 14 der Vorrichtung 1 unterschiedliche Funktionen erfüllen. In den drei Bereichen 9, 10 und 11 sind die Abstände der Brechungsindexänderungen gleich λ/4, das heißt die optischen Dicken der Schichten 2 und 3 betragen jeweils ein Viertel der Designwellenlänge λ. Dadurch bilden die Bereiche 9, 10 und 11 Reflektoren 12 für das Licht 8 aus. Zwischen jeweils zwei der Reflektoren 12 sind in den beiden Bereichen 13 und 14 Resonatoren 15 für das Licht 8 mit der Designwellenlänge λ ausgebildet. Die entsprechende optische Schichtdicke der Schichten 4 und 5, die sich in diesen Bereichen 13 und 14 befinden, beträgt dabei λ/2 oder ein Vielfaches von λ/2. Grundsätzlich können alle Resonatoren 15 des optischen Elements 1 durch Schichten 4 und 5 mit einer gleichen optischen Schichtdicke ausgebildet sein. Die Resonatoren 15 sind dennoch nicht völlig gleich. Vielmehr unterscheiden sie sich in der Kerr-Aktivität ihres Materials und/oder in der in ihren Bereichen 13 und 14 resultierenden Intensität I_{Res} des Lichts 8, so dass sich deutlich unterschiedliche Kerr-Effekte in den Bereichen 13 und 14 ergeben. Konkret unterscheiden sich mindestens zwei der Resonatoren 15 des optischen Elements 1 in ihren nichtlinearen Anteilen I_{Res}(i) · n₂(i) an ihren Gesamtbrechungsindices n(i) = n₀(i) + I_{Res}(i) · n₂(i) um mindestens 50 % des vom Betrag her kleineren der beiden nichtlinearen Anteile I_{Res}(i) · n₂(i). Dabei ist I_{Res}(i) die schon angesprochene resultierende Intensität des Lichts 8 im Bereich 13, 14 des jeweiligen Reflektors 15 und n₂(i) ein nichtlinearer Brechungsindex des jeweiligen Resonators.

Durch den mit zunehmender Intensität I des Lichts 8 unterschiedlichen Kerr-Effekt in den Bereichen 13 und 14 werden die Resonatoren 15 unterschiedlich verstimmt oder, wenn sie bei geringer Intensität I des Lichts 8 gegeneinander verstimmt waren, aufeinander abgestimmt. Auf diese Weise ändert sich die optische Eigenschaft des optischen Elements 1 für das Licht 8 mit der Designwellenlänge λ mit zunehmender Intensität zwischen Transmission, die sich dann ergibt, wenn alle Resonatoren 15 bei der jeweiligen Intensität I auf die Designwellenlänge λ abgestimmt sind, und Reflexion, bei der zumindest einer der Resonatoren, aber nicht alle der Resonatoren 15 in gleichem Maße bezüglich der Designwellenlänge λ verstimmt sind.

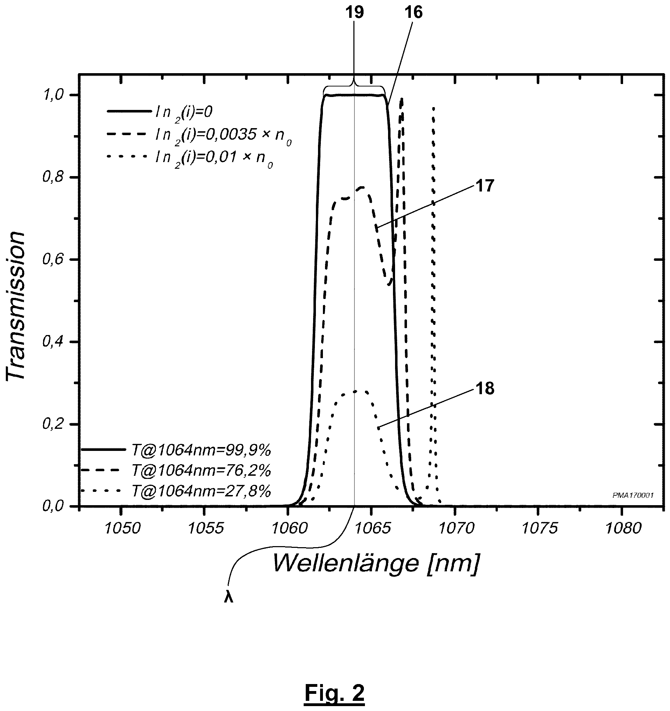

**Fig. 2** zeigt die Veränderung des spektralen Verhaltens einer ersten praktischen Ausführungsform des erfindungsgemäßen optischen Elements 1 mit insgesamt 97 Schichten 2 bis 5, die sechs Reflektoren 12 und fünf dazwischen angeordnete Resonatoren 15 ausbilden. Dabei ist die Auswirkung eines nur bei dem zentralen Resonator 15 auftretenden Kerr-Effekts dargestellt. Eine Kurve 16 zeigt die Ausgangssituation ohne Veränderung des Brechungsindex im Bereich des zentralen Resonators. Eine Kurve 17 zeigt die Auswirkungen einer Änderung des Brechungsindex n(i) im Bereich des zentralen Resonators um 0,35 %, und eine Kurve 18 die Auswirkungen einer Änderung des Brechungsindex n(i) im Bereich des zentralen Resonators um 1 %. Mit der Brechungsindexänderung im Bereich des zentralen Resonators geht die Transmission von anfangs über 95 % auf unter 30 % zurück, und zwar in einem relativ breiten Durchlassband 19 um die Designwellenlänge λ. Bei der Designwellenlänge λ von 1064 nm geht die Transmission von 99,9 % mit der Änderung des Brechungsindex n(i) im Bereich des zentralen Resonators um 0,35 % auf 76,2 % und mit der Änderung des Brechungsindex n(i) im Bereich des zentralen Resonators um 1 % auf 27,8 % zurück.

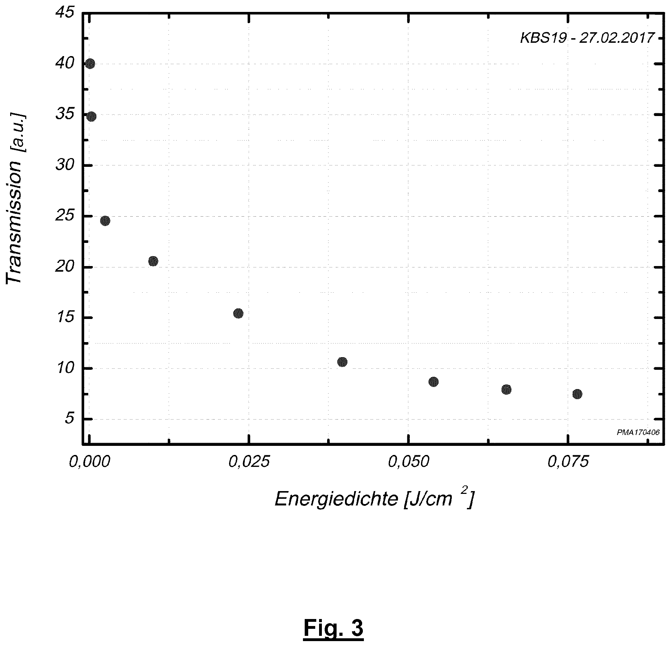

**Fig. 3** zeigt das Ergebnis von intensitätsabhängigen Transmissionsmessungen an der ersten praktischen Ausführungsform des erfindungsgemäßen optischen Elements 1, wie sie Fig. 2 zugrunde liegt, d h. mit einem mit der Intensität des Lichts 8 selektiv in dem zentralen Resonator 15 ansteigenden Kerr-Effekt. Das optische Element 1, an dem die Transmissionsmessungen durchgeführt wurden, war hier aber für eine Designwellenlänge λ von 1030 nm ausgelegt. Zu sehen ist, wie Laserpulse mit der Designwellenlänge λ von 1030 nm und einer Pulsdauer von 350 fs bei steigender Energiedichte zu immer kleineren Anteilen von dem optischen Element 1 transmittiert werden.

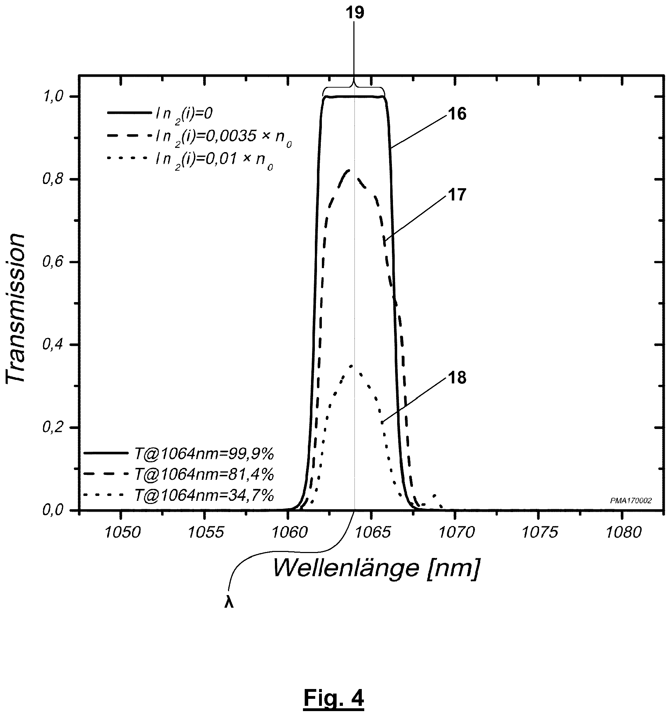

**Fig. 4** zeigt die entsprechende Veränderung des spektralen Verhaltens des optischen Elements mit 97 Schichten einschließlich fünf Resonatoren, die sich dann ergibt, wenn sich der Brechungsindex in dem in der Einfallsrichtung des Lichts 8 gemäß Fig. 1 zweiten Resonator um 0,35 % beziehungsweise 1 % ändert. Hier tritt das in Fig. 2 zu sehende Nebenmaximum der Transmission bei einer größeren Wellenlänge nicht auf. Hier geht die Transmission bei der Designwellenlänge λ von 1064 nm von 99,9 % mit der Änderung des Brechungsindex n(i) im Bereich des zweiten Resonators um 0,35 % auf 81,4 % und mit der Änderung des Brechungsindex n(i) im Bereich des zweiten Resonators um 1 % auf 34,7 % zurück.

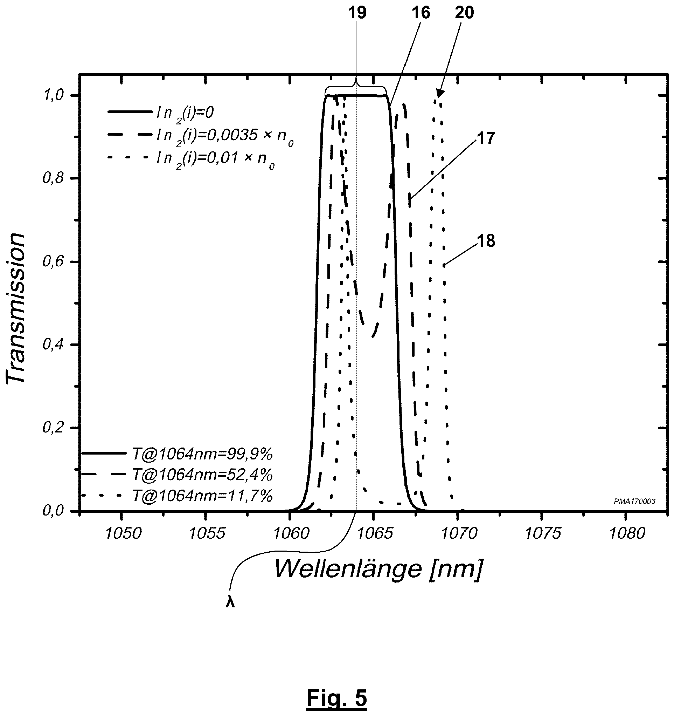

**Fig. 5** geht wieder von demselben optischen Element 1 mit 97 Schichten einschließlich fünf Resonatoren aus und zeigt den Effekt bei einer Änderung des Brechungsindex in dem zweiten und vierten Resonator. Hier geht die Transmission für den längerwelligen Teil des Durchlassbands 19 um die Designwellenlänge λ auf fast null zurück. Konkret geht die Transmission bei der Designwellenlänge λ von 1064 nm von 99,9 % mit der Änderung des Brechungsindex n(i) im Bereich des zweiten und vierten Resonators um 0,35 % auf 52,4 % und mit der Änderung des Brechungsindex n(i) im Bereich des zweiten und vierten Resonators um 1 % auf 11,7 % zurück. Umgekehrt tritt bei der Änderung des Brechungsindex in den Resonatoren 2 und 4 um 1 % in einem weiteren schmalbandigen Durchlassband 20 bei einer größeren Wellenlänge, in dem das optische Element 1 zunächst vollständig reflektierte, eine über 95%ige Transmission auf. Sowohl von dem Einbruch der Transmission in einem Teil des Durchlassbands 19 als auch dem weiteren Durchlassband 20 kann bei der Verwendung des optischen Elements 1 gemäß Fig. 1 gezielt gebraucht gemacht werden.

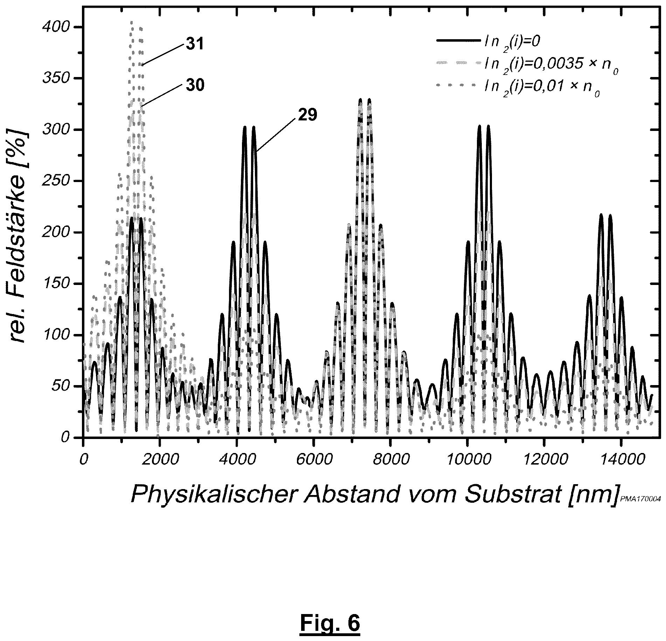

**Fig. 6** zeigt die Veränderung der Feldstärkeverteilung über das optische Element 1 mit 97 Schichten einschließlich fünf Resonatoren, die mit der Veränderung seines spektralen Verhaltens gemäß Fig. 5 einhergeht. Dabei entspricht die Kurve 29 der Feldstärkeverteilung über das optische Element 1 ohne Kerr-Effekt, während die Kurven 30 und 31 der Feldstärkeverteilung bei einer Änderung des Brechungsindex n(i) im Bereich des zweiten und vierten Resonators um 0,35 % bzw. um 1 % entsprechen. Die Feldstärkeverteilung weist jeweils lokale Maxima im Bereich der Resonatoren 15 auf. Mit zunehmendem Kerr-Effekt, d. h. zunehmender Änderung des Brechungsindex n(i) im Bereich des zweiten und vierten Resonators konzentriert sich die Feldstärke auf den linken Bereich des Schichtaufbaus, was der abnehmenden Transmission und der entsprechend zunehmenden Reflexion des von links einfallenden Lichts 8 entspricht.

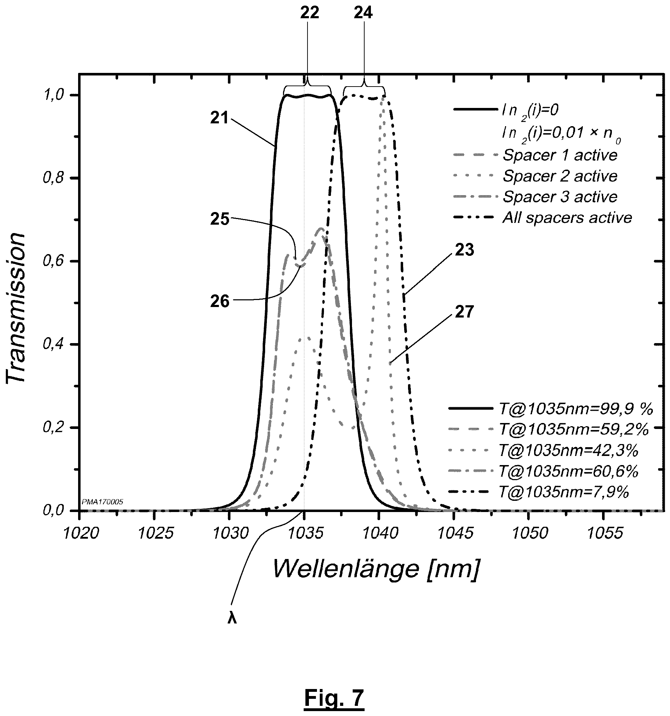

**Fig. 7** zeigt die Veränderung des spektralen Verhaltens eines anderen erfindungsgemäßen optischen Elements 1 mit insgesamt 59 Schichten 2 bis 5, die drei Resonatoren 15 zwischen vier Reflektoren 4 ausbilden. Eine Kurve 21 zeigt die Ausgangssituation, in der alle Resonatoren 15 auf die Designwellenlänge λ abgestimmt sind. Es ergibt sich ein Durchlassband 22 um die Designwellenlänge λ. Wenn der Brechungsindex aller Resonatoren 15 um 1 % geändert, das heißt erhöht wird, ergibt sich der von der Kurve 23 dargestellte Verlauf der Transmission T über der Wellenlänge. Sie bedeutet eine reine Verschiebung des Durchlassbands 22 in ein gleich breites Durchlassband 24 bei größeren Wellenlängen. Wenn hingegen selektiv im ersten oder zweiten Resonator der Brechungsindex um 1 % geändert wird, ergeben sich fast identische Verläufe der Transmissionen über der Wellenlänge gemäß den Kurven 25 und 26. Sie bedeuten eine deutliche Reduktion der Transmission in dem ursprünglichen Durchlassband 22 ohne Verschiebung desselben. Wenn hingegen selektiv der Brechungsindex des mittleren Resonators um 1 % verändert wird, ergibt sich die Kurve 27, das heißt eine noch stärkere Reduktion der Transmission in dem Durchlassband 22 und ein zusätzliches schmalbandiges Durchlassband 28.

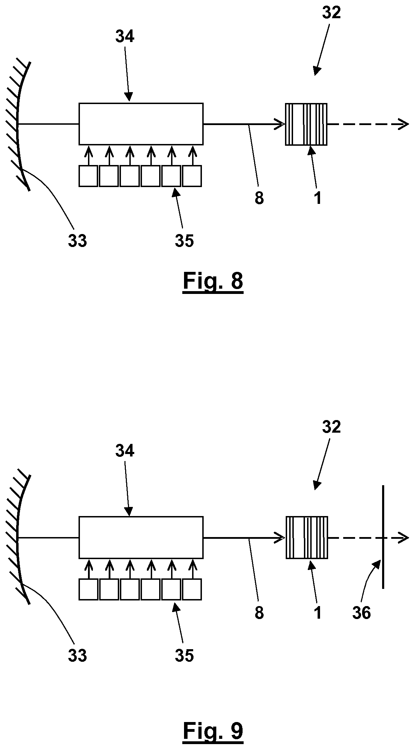

**Fig. 8** zeigt stark schematisch einen Laserresonator 32, der zwischen einem Spiegel 33 und einem optischen Element 1 ausgebildet ist. In dem Laserresonator 32 ist laseraktives Material 34 angeordnet, dass mithilfe einer Pumplichtquelle 35 gepumpt wird. Das optische Element 1 dient hier bei niedrigen Intensitäten des Lichts 8 in dem Resonator als Endspiegel, der dann transparent wird, wenn die Intensität des Lichts 8 bei der Designwellenlänge des optischen Elements 1 eine vorgegebene Intensität überschreitet.

**Fig. 9** illustriert eine andere Verwendung des optischen Elements 1 in einem Laserresonator 32, der hier zwischen dem Spiegel 33 und einem halbdurchlässigen Spiegel 36 ausgebildet ist. Hier dient das optische Element 1 als Modenkoppler oder Q-Switch, der erst dann durchlässig wird, wenn das Licht 8 in dem von ihm begrenzten und das laseraktive Material 34 aufnehmenden Teil des Resonators 32 bei der Designwellenlänge eine gewisse Mindestintensität überschreitet.

### BEZUGSZEICHENLISTE

- 1: optisches Element
- 2: Schichten
- 3: Schichten
- 4: Schichten
- 5: Schichten
- 6: Brechungsindexänderung
- 7: optische Achse
- 8: Licht
- 9: Bereich
- 10: Bereich
- 11: Bereich
- 12: Reflektor
- 13: Bereich
- 14: Bereich
- 15: Resonator
- 16: Kurve
- 17: Kurve
- 18: Kurve
- 19: Durchlassband
- 20: weiteres Durchlassband
- 21: Kurve
- 22: Durchlassband
- 23: Kurve
- 24: verschobenes Durchlassband
- 25: Kurve
- 26: Kurve
- 27: Kurve
- 28: schmalbandiges Durchlassband
- 29: Kurve
- 30: Kurve
- 31: Kurve
- 32: Laserresonator
- 33: Endspiegel
- 34: Lasermaterial
- 35: Pumplichtquelle
- 36: halbdurchlässiger Spiegel
- λ: Designwellenlänge

## Patentansprüche

1. Optisches Element (1) mit einer optischen Achse (7), einer Designwellenlänge (λ) und alternierenden Brechungsindexänderungen (6) längs der optischen Achse (7),
- wobei in mindestens drei längs der optischen Achse (7) aufeinander folgenden Bereichen (9, 10, 11, 13, 14) durch die alternierenden Brechungsindexänderungen (6) Reflektoren (12) für längs der optischen Achse (7) einfallendes Licht (8) mit der Designwellenlänge (λ) ausgebildet sind,
- wobei zwischen jeweils zwei der aufeinander folgenden Reflektoren (12) durch die alternierenden Brechungsindexänderungen (6) ein optischer Resonator (15) für das längs der optischen Achse (7) einfallende Licht (8) mit der Designwellenlänge (λ) ausgebildet ist und
- wobei mindestens einer der Resonatoren (15) ein Kerr-aktives Material umfasst,
**dadurch gekennzeichnet,**
- **dass** sich mindestens zwei der Resonatoren (15) in nichtlinearen Anteilen I_{Res}(i) · n₂(i) an ihren Gesamtbrechungsindices n(i) = n₀(i) + I_{Res}(i) · n₂(i) um mindestens 50 % des vom Betrag her kleineren der beiden nichtlinearen Anteile I_{Res}(i) · n₂(i) unterscheiden,
- wobei I_{Res}(i) eine aufgrund einer Anordnung des jeweiligen Resonators (15) zwischen den Reflektoren (12) in dem jeweiligen Resonator (15) resultierende Intensität des längs der optischen Achse (7) eingestrahlten Lichts (8) mit der Designwellenlänge (λ) ist und
- wobei n₂(i) ein nichtlinearer Brechungsindex des jeweiligen Resonators (15) ist.

2. Optisches Element (1) nach Anspruch 1, **dadurch gekennzeichnet, dass** die Reflektoren (12) zumindest überwiegend aus nicht Kerr-aktivem Materialen ausgebildet sind, die einen von der Intensität I des Lichts (8) abhängigen Gesamtbrechungsindex n(k) = n₀(k) + I · n₂(k) aufweisen, wobei ein Betrag eines nichtlinearen Brechungsindex n₂(k) maximal die Hälfte oder maximal ein Viertel oder maximal ein Achtel des Betrags des nichtlinearen Brechungsindex n₂(i) des mindestens einen Resonators (15) mit dem Kerr-aktiven Material ist.

3. Optisches Element (1) nach Anspruch 2, **dadurch gekennzeichnet, dass** der Betrag des nichtlinearen Brechungsindex n₂(k) der nicht Kerr-aktiven Materialen der Reflektoren (12) kleiner oder gleich 4,0 x 10⁻¹⁶ cm²/W oder kleiner oder gleich 3,0 x 10⁻¹⁶ cm²/W oder kleiner oder gleich 2,0 x 10⁻¹⁶ cm²/W ist.

4. Optisches Element (1) nach einem der vorhergehenden Ansprüche, **dadurch gekennzeichnet, dass** mindestens ein weiterer der Resonatoren (15) zumindest überwiegend aus nicht Kerr-aktivem Material ausgebildet ist, so dass er einen Gesamtbrechungsindex n(p) = n₀(p) + I · n₂(p) aufweist, wobei ein Betrag eines nichtlinearen Brechungsindex n₂(p) maximal die Hälfte oder maximal ein Viertel oder maximal ein Achtel des Betrags des nichtlinearen Brechungsindex n₂(i) des mindestens einen Resonators (15) mit dem Kerr-aktiven Material ist.

5. Optisches Element (1) nach Anspruch 4, **dadurch gekennzeichnet, dass** der Betrag des nichtlinearen Brechungsindex n₂(p) des mindestens einen weiteren der Resonatoren (15) kleiner oder gleich 4,0 x 10⁻¹⁶ cm²/W oder kleiner oder gleich 3,0 x 10⁻¹⁶ cm²/W oder kleiner oder gleich 2,0 x 10⁻¹⁶ cm²/W ist.

6. Optisches Element (1) nach einem der vorhergehenden Ansprüche, **dadurch gekennzeichnet, dass** das Kerr-aktive Material des mindestens einen der Resonatoren (15) TiO₂ ist und dass optional mindestens eines der folgenden Merkmale erfüllt ist:
- Kerr-aktives Material mindestens eines weiteren der Resonatoren (15) besteht aus Ta₂O₅ oder einem anderen Metalloxid,
- mindestens einer der Reflektoren (12) weist SiO₂ als niedrig-brechendes nicht Kerr-aktives Material auf und
- mindestens einer der Reflektoren (12) weist Ta₂O₅ oder ein anderes Metalloxid als hochbrechendes nicht Kerr-aktives Material auf.

7. Optisches Element (1) nach einem der vorhergehenden Ansprüche, **dadurch gekennzeichnet, dass** ein Betrag eines nichtlinearen Brechungsindex n₂ des Kerr-aktiven Materials des mindestens einen der Resonatoren (15), das einen von der Intensität I des Lichts (8) abhängigen Gesamtbrechungsindex n_{Kerr} = n₀ + I · n₂ aufweist, größer oder gleich 1 x 10⁻¹⁴ cm²/W oder größer oder gleich 1 x 10⁻¹² cm²/W oder größer oder gleich 1 x 10⁻¹⁰ cm²/W oder größer oder gleich 1 x 10⁻⁸ cm²/W oder größer oder gleich 1 x 10⁻⁶ cm²/W ist.

8. Optisches Element (1) nach einem der vorhergehenden Ansprüche, **dadurch gekennzeichnet, dass** das Kerr-aktive Material des mindestens einen der Resonatoren (15) ein Polymer ist.

9. Optisches Element (1) nach einem der vorhergehenden Ansprüche, **dadurch gekennzeichnet, dass** das Kerr-aktive Material des mindestens einen der Resonatoren (15) mit Nanopartikeln dotiert ist, die mindestens ein Metall oder einen Halbleiter aufweisen.

10. Optisches Element (1) nach Anspruch 9, **dadurch gekennzeichnet, dass** die Nanopartikel eine Partikelgröße im Bereich von 1 bis 100 nm aufweisen.

11. Optisches Element (1) nach Anspruch 9 oder 10, **dadurch gekennzeichnet, dass** die Nanopartikel zumindest überwiegend aus Gold, Silber, Platin, Palladium oder Kupfer ausgebildet sind.

12. Optisches Element (1) nach einem der vorhergehenden Ansprüche, **dadurch gekennzeichnet, dass** eine Erhöhung der Intensität I des längs der optischen Achse (7) einfallenden Lichts (8) mit der Designwellenlänge (λ) die Transmission des optischen Elements (1) in einem Durchlassband (19, 20, 22, 28) um die Designwellenlänge (λ) entweder reduziert oder erhöht.

13. Verwendung eines optischen Elements (1) nach einem der vorhergehenden Ansprüche 1 bis 12 als optischer Schalter in einem Laserresonator (32).

14. Verwendung eines optischen Elements (1) nach einem der vorhergehenden Ansprüche 1 bis 12 als Modenkoppler und/oder Q-Switch und/oder Leistungsschutzschalter in einem Laserresonator (32).

## Claims

1. Optical element (1) comprising an optical axis (7), a design wavelength (λ) and alternating refractive index changes (6) along the optical axis (7),
- wherein, in at least three areas (9, 10,11, 13, 14) following to one another along the optical axis (7), reflectors (12) for light (8) of the design wavelength (λ) incident along the optical axis (7) are formed by the alternating refractive index changes (6),
- wherein, between each two of the reflectors (12) following to one another, an optical resonator (15) for the light (8) of the design wavelength (λ) incident along the optical axis (7) is formed by the alternating refractive index changes (6), and
- wherein at least one of the resonators (15) includes a Kerr-active material,
**characterised in,**
- **that** at least two of the resonators (15) differ in non-linear components I_{Res}(i) · n₂(i) of their total refractive indices n(i) = n₀(i) + I_{Res}(i) · n₂(i) by at least 50 % of that one of the two non-linear components I_{Res}(i) · n₂(i) that is the smaller one in terms of absolute value,
- wherein I_{Res}(i) is a resulting intensity of the light of the design wavelength (A) incidents along the optical axes that results within the respective resonator (15) due to the arrangement of the respective resonator (15) between the reflectors (12),
- wherein n₂(i) is an non-linear refractive index of the respective resonator (15).

2. Optical element (1) of claim 1, **characterised in that** the reflectors (12) are, at least by the majority of their weight, made of non Kerr-active materials which have a total refractive index n(k) = n₀(k) + I · n₂(k) depending on the intensity I of the light (8), wherein an absolute value of a non-linear refractive index n₂(k) is at maximum the half or at maximum a quarter or at maximum an eighth of the absolute value of the non-linear refractive index n₂(i) of the at least one resonator (15) comprising the Kerr-active material.

3. Optical element (1) of claim 2, **characterised in that** the absolute value of the non-linear refractive index n₂(k) of the non Kerr-active materials of the reflectors (12) is smaller than or equal to 4,0 x 10⁻¹⁶ cm²/W or smaller than or equal to 3,0 x 10⁻¹⁶ cm²/W or smaller than or equal to 2,0 x 10⁻¹⁶ cm²/W.

4. Optical element (1) of any of the preceding claims, **characterised in that** at least one further one of the resonators (15) , at least by the majority of its weight, consists of a Kerr-active material such that it has a total refractive index n(p) = n₀(p) + I · n₂(p), wherein a total value of a non-linear refractive n₂(p) is at maximum the half or at maximum a quarter or at maximum an eighth of the absolute value of the non-linear refractive index n₂(i) of the at least one resonator (15) comprising the Kerr-active material.

5. Optical element (1) of claim 4, **characterised in that** the absolute value of the non-linear refractive index n₂(p) of the at least one further one of the resonators (15) is smaller than or equal to 4,0 x 10⁻¹⁶ cm²/W or smaller than or equal to 3,0 x 10⁻¹⁶ cm²/W or smaller than or equal to 2,0 x 10⁻¹⁶ cm²/W.

6. Optical element (1) of any of the preceding claims, **characterised in that** the Kerr-active material of the at least one of the resonators (15) is TiO₂, and that, optionally, at least one of the further criterions is fulfilled:
- Kerr-active material of at least one of the further ones of the resonators (15) consists of Ta₂O₅ or another metal oxide,
- at least one of the reflectors (12) comprises SiO₂ as a material of low refractivity which is not Kerr-active, and
- at least one of the reflectors (12) comprises Ta₂O₅ or another metal oxide as a material of high refractivity which is not Kerr-active.

7. Optical element (1) of any of the preceding claims, **characterised in that** an absolute value of a non-linear refractive index n₂ of the Kerr-active material of at least one of the resonators (15) which has a total refractive index n_{Kerr} = n₀ + I · n₂ depending on the intensity of the light (8) is higher than or equal to 1 x 10⁻¹⁴ cm²/W or higher than or equal to 1 x 10⁻¹² cm²/W or higher than or equal to 1 x 10⁻¹⁰ cm²/W or higher than or equal to 1 x 10⁻⁸ cm²/W or higher than or equal to 1 x 10⁻⁶ cm²/W.

8. Optical element (1) of any of the preceding claims, **characterised in that** the Kerr-active material of the at least one of the resonators (15) is a polymer.

9. Optical element (1) of any of the preceding claims, **characterised in that** the Kerr-active material of the at least one of the resonators (15) is doped by nano-particles which comprise at least a metal or a semiconductor.

10. Optical element (1) of claim 9, **characterised in that** the nano-particle have a particle size in a range from 1 to 100 nm.

11. Optical element (1) of claim 9 or 10, **characterised in that** the nano-particles are, at least by the majority of their weight, made of gold, silver, platinum, palladium or copper.

12. Optical element (1) of any of the preceding claims, **characterised in that** an increase of the intensity I of the light (8) comprising the design wavelength (λ) incident along the optical axis (7) either reduces or increases the transmission of the optical element (1) in a passband (19, 20, 22, 28) around the design wavelength (λ).

13. Use of an optical element (1) of any of the preceding claims 1 to 12 as an optical switch in a laser resonator (32).

14. Use of an optical element (1) of any of the preceding claims 1 to 12 as an mode coupler, a q-switch and/or as a power safety switch in a laser resonator (32).

## Revendications

1. Élément optique (1) doté d'un axe optique (7), d'une longueur d'onde nominale (λ) et d'alternances de variations de l'indice de réfraction (6) le long de l'axe optique (7),
- des réflecteurs (12) pour la lumière (8) incidente le long de l'axe optique (7) ayant la longueur d'onde nominale (λ) étant constitués par les variations de l'indice de réfraction (6) dans au moins trois zones (9, 10, 11, 13, 14) se suivant les unes les autres le long de l'axe optique (7),
-, un résonateur (15) optique pour la lumière (8) incidente le long de l'axe optique (7) ayant la longueur d'onde nominale (λ) étant constitué entre respectivement deux des réflecteurs (12) se suivant l'un l'autre par les variations de l'indice de réfraction (6),
- au moins un des résonateurs (15) comprenant un matériau actif à effet Kerr,
**caractérisé en ce que**
- au moins deux des résonateurs (15) se distinguent en fractions non linéaires I_{Res}(i)·n₂(i) sur leurs indices globaux de réflexion n(i) = n₀(i) + I_{Res}(i)·n₂(i) d'au moins 50 % de la fraction la plus petite, quant à la valeur, des deux fractions non linéaires I_{Res}(i)·n₂(i),
- I_{Res}(i) étant une intensité, résultant dans le résonateur (15) respectif du fait d'un agencement du résonateur (15) respectif entre les réflecteurs (12), de la lumière (8) incidente le long de l'axe optique (7) ayant la longueur d'onde nominale (λ), et
- n₂(i) étant un indice de réfraction non linéaire du résonateur (15) respectif.

2. Élément optique (1) selon la revendication 1, **caractérisé en ce que** les réflecteurs (12) sont constitués au moins majoritairement de non-matériaux actifs à effet Kerr qui présentent un indice global de réfraction n(k) = n₀(k) + I · n₂(k) qui dépend de l'intensité I de la lumière (8), une valeur d'un indice de réfraction n₂(k) non linéaire étant égale au maximum à la moitié ou au maximum à un quart ou au maximum à un huitième de la valeur de l'indice de réfraction non linéaire n₂(i) de l'au moins un résonateur (15) ayant le matériau actif à effet Kerr.

3. Élément optique (1) selon la revendication 2, **caractérisé en ce que** la valeur de l'indice de réfraction n₂(k) non linéaire des non-matériaux actifs à effet Kerr des réflecteurs (12) est inférieure ou égale à 4,0 x 10⁻¹⁶ cm²/W ou inférieure ou égale à 3,0 x 10⁻¹⁶ cm²/W ou inférieure ou égale à 2,0 x 10⁻¹⁶ cm²/W.

4. Élément optique (1) selon l'une des revendications précédentes, **caractérisé en ce qu**'au moins un autre des résonateurs (15) est constitué au moins majoritairement de non-matériaux actifs à effet Kerr de telle sorte qu'il présente un indice global de réfraction n(p) = n₀(p) + I · n₂(p), une valeur d'un indice de réfraction non linéaire n₂(p) étant égale au maximum à la moitié ou au maximum à un quart ou au maximum à un huitième de la valeur de l'indice de réfraction non linéaire n₂(i) de l'au moins un résonateur (15) ayant le matériau actif à effet Kerr.

5. Élément optique (1) selon la revendication 4, **caractérisé en ce que** la valeur de l'indice de réfraction non linéaire n₂(p) de l'au moins un autre des résonateurs (15) est inférieure ou égale à 4,0 x 10⁻¹⁶ cm²/W ou inférieure ou égale à 3,0 x 10⁻¹⁶ cm²/W ou inférieure ou égale à 2,0 x 10⁻¹⁶ cm²/W.

6. Élément optique (1) selon l'une des revendications précédentes, **caractérisé en ce que** le matériau actif à effet Kerr de l'au moins un des résonateurs (15) est TiO₂ et **en ce que**, optionnellement, au moins une des caractéristiques suivantes est présente :
- le matériau actif à effet Kerr d'au moins un autre des résonateurs (15) est composé de Ta₂O₅ ou d'un autre oxyde métallique,
- au moins un des réflecteurs (12) comporte SiO₂ en tant que non-matériau actif à effet Kerr à faible réfraction, et
- au moins un des réflecteurs (12) comporte Ta₂O₅ ou un autre oxyde métallique en tant que non-matériau actif à effet Kerr à forte réfraction.

7. Élément optique (1) selon l'une des revendications précédentes, **caractérisé en ce qu**'une valeur d'un indice de réfraction non linéaire n₂ du matériau actif à effet Kerr de l'au moins un des résonateurs (15), qui présente un indice global de réfraction n_{Kerr} = n₀ + I · n₂ qui dépend de l'intensité I de la lumière (8), est supérieure ou égale à 1 x 10⁻¹⁴ cm²/W ou supérieure ou égale à 1 x 10⁻¹² cm²/W ou supérieure ou égale à 1 x 10⁻¹⁰ cm²/W ou supérieure ou égale à 1 x 10⁻⁸ cm²/W ou supérieure ou égale à 1 x 10⁻⁶ cm²/W.

8. Élément optique (1) selon l'une des revendications précédentes, **caractérisé en ce que** le matériau actif à effet Kerr de l'au moins un des résonateurs (15) est un polymère.

9. Élément optique (1) selon l'une des revendications précédentes, **caractérisé en ce que** le matériau actif à effet Kerr de l'au moins un des résonateurs (15) est doté de nanoparticules qui comportent au moins un métal ou un semi-conducteur.

10. Élément optique (1) selon la revendication 9, **caractérisé en ce que** les nanoparticules présentent une taille de particules dans la plage de 1 à 100 nm.

11. Élément optique (1) selon la revendication 9 ou 10, **caractérisé en ce que** les nanoparticules sont constituées au moins majoritairement d'or, d'argent, de platine, de palladium ou de cuivre.

12. Élément optique (1) selon l'une des revendications précédentes, **caractérisé en ce qu**'une augmentation de l'intensité I de la lumière (8) incidente le long de l'axe optique (7) ayant la longueur d'onde nominale (λ) ou bien réduit, ou bien augmente, de la longueur d'onde nominale (λ), la transmission de l'élément optique (1) dans une bande passante (19, 20, 22, 28).

13. Utilisation d'un élément optique (1) selon l'une des revendications précédentes 1 à 12 en tant que commutateur optique dans un résonateur laser (32).

14. Utilisation d'un élément optique (1) selon l'une des revendications précédentes 1 à 12 en tant que coupleur de mode et/ou Q-Switch et/ou disjoncteur de puissance dans un résonateur laser (32).
